# EUROPEAN PATENT APPLICATION

(11) **EP 4 245 781 A1**
(43) Date of publication of application: **20.09.2023**
(21) Application number: 21891814.2
(22) Date of filing: 08.11.2021
(51) Int. Cl.: C08F 220/10, C08F 224/00, C09K 3/18

(54) **COPOLYMER**

(30) Priority: 11.11.2020 JP 2020188186
(71) Applicant: Daikin Industries, Ltd., Osaka-shi, Osaka 530-0001 (JP); OSAKA UNIVERSITY, Suita-shi Osaka 565-0871 (JP)
(72) Inventor: AKUTA, Ryou, Osaka-shi, Osaka 530-8323 (JP); HIGASHI, Masahiro, Osaka-shi, Osaka 530-8323 (JP); KAWABE, Takuma, Osaka-shi, Osaka 530-8323 (JP); ASOH, Taka-Aki, Suita-shi, Osaka 565-0871 (JP); UYAMA, Hiroshi, Suita-shi, Osaka 565-0871 (JP)
(74) Representative: Hoffmann Eitle
(86) International application number: PCT/JP2021/040963
(87) International publication number: WO 2022/102568

(57) **Abstract**

The present invention provides a vinyl copolymer which has liquid repellency and biodegradability by means of a copolymer which has a repeating unit that is derived from a hydrophobic monomer having an ethylenically unsaturated double bond and a hydrocarbon group having from 3 to 40 carbon atoms, and a repeating unit that is derived from a cyclic vinylidene monomer, which is a compound represented by formula (wherein X represents an aliphatic group having from 1 to 10 carbon atoms; and Z represents at least one atom or group that is selected from the group consisting of a hydrogen atom, a hydrocarbon group having from 1 to 6 carbon atoms, and halogen atoms).

## Description

### Technical Field

The present disclosure relates to a copolymer and in particular a copolymer having an ester bond in the main chain.

### Background Art

Water repellent agents and oil repellent agents capable of imparting liquid repellency (water-repellency and/or oil-repellency) to various substrates have been developed.

Liquid repellency is known to be exhibited by using a fluorine-containing polymer, but it is difficult to impart liquid repellency by using a non-fluorine polymer. Furthermore, to realize a sustainable society, biodegradable materials have been developed.

Patent Literature 1 discloses a silicone composition that comprises a specific polyorganosiloxane and that can impart water-repellency and oil-repellency to paper substrates.

Patent Literature 2 discloses, as a polyester which can improve water- and oil-repellency of coating, a fluorine-containing polyester prepared by polymerizing a radically polymerizable fluorine-containing monomer having a perfluoroalkyl group and a cyclic vinylidene monomer.

### Citation List

### Patent Literature

Patent Literature 1: JP 2006-257159 A

### Summary of Invention

### Technical Problem

Patent Literature 1 discloses that using a composition comprising a specific organosiloxane realizes moderate biodegradability, but since organosiloxane is used, the problem is low freedom in molecular design of the polymer.

An object of the present disclosure is to provide a vinyl copolymer having liquid repellency and biodegradability.

### Solution to Problem

An embodiment of the present disclosure is as follows.

### [Item 1]

A copolymer comprising:
a repeating unit derived from a hydrophobic monomer comprising one ethylenically unsaturated double bond and a hydrocarbon group having 3 to 40 carbon atoms; and
a repeating unit derived from a cyclic vinylidene monomer that is a compound represented by the formula: 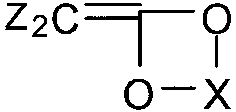
wherein X is an aliphatic group having 1 to 10 carbon atoms, and Z is at least one selected from the group consisting of a hydrogen atom, a hydrocarbon group having 1 to 6 carbon atoms, and a halogen atom.

### [Item 2]

The copolymer according to item 1, wherein a copolymer has an ester bond in a skeleton of the main chain.

### [Item 3]

The copolymer according to item 1 or 2, wherein X is an alkylene group optionally having a substituent or an alkylene group optionally interrupted by ethereal oxygen.

### [Item 4]

The copolymer according to any one of items 1 to 3, wherein the hydrophobic monomer is a compound represented by the formula:

CH₂=C(-R¹²)-C(=O)-Y¹¹-(R¹¹)ₖ

wherein R¹¹ is an aliphatic hydrocarbon group having 3 to 40 carbon atoms,
R¹² is a hydrogen atom, a monovalent organic group or a halogen atom,
Y¹¹ is a divalent to tetravalent group composed of at least one selected from a direct bond, a divalent to tetravalent hydrocarbon group having 1 carbon atom, - C₆H₄-, -O-, -C(=O)-, -S(=O)₂- and -NR'-, where R' is a hydrogen atom or a hydrocarbon group having 1 to 4 carbon atoms, and
k is 1 to 3.

### [Item 5]

The copolymer according to any one of items 1 to 4, comprising 10 parts by mole or more and 60 parts by mole or less of the repeating unit derived from a hydrophobic monomer and 20 parts by mole or more and 90 parts by mole or less of the repeating unit derived from a cyclic vinylidene monomer based on 100 parts by mole in total of the repeating units.

### [Item 6]

The copolymer according to any one of items 1 to 5, wherein the copolymer is a non-fluorine copolymer.

### [Item 7]

A method for producing a copolymer having an ester bond in the main chain, comprising:
copolymerizing a hydrophobic monomer comprising one ethylenically unsaturated double bond and a hydrocarbon group having 3 to 40 carbon atoms, with a cyclic vinylidene monomer represented by the formula: 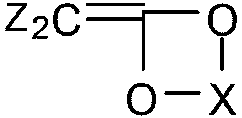 wherein X is an aliphatic group having 1 to 10 carbon atoms and Z is at least one selected from the group consisting of a hydrogen atom, a hydrocarbon group having 1 to 6 carbon atoms, and a halogen atom.

### [Item 8]

The method according to item 7, wherein the copolymerization is radical copolymerization.

### [Item 9]

A water- and oil-repellent composition comprising the copolymer according to any one of items 1 to 6.

### [Item 10]

The water- and oil-repellent composition according to item 9, which is for a textile product.

### [Item 11]

A textile product to which the copolymer according to any one of items 1 to 6 is attached.

### Advantageous Effects of Invention

Use of the copolymer of the present disclosure allows a substrate to have liquid repellency (water-repellency and/or oil-repellency). Furthermore, the copolymer of the present disclosure, which is biodegradable, helps reduce the environmental load significantly. Moreover, since the copolymer of the present disclosure is a copolymer of vinyl monomers, a wide variety of vinyl monomers can be copolymerized and thus freedom of molecular design is high. The copolymer of the present disclosure is liquid repellent even when the fluorine-containing group it includes has 6 or less carbon atoms (when the group is, for example, a perfluoroalkyl group having 6 or less carbon atoms) or even when the copolymer is a non-fluorine copolymer.

### Description of Embodiments

### <Copolymer>

The copolymer of the present disclosure comprises a repeating unit derived from a hydrophobic monomer comprising one ethylenically unsaturated double bond and a hydrocarbon group having 3 to 40 carbon atoms and a repeating unit derived from a cyclic vinylidene monomer.

The copolymer of the present disclosure has an ester bond in a skeleton of the main chain. The presence of an ester bond in the skeleton of the main chain provides biodegradability.

### [Hydrophobic monomer]

The hydrophobic monomer comprises one ethylenically unsaturated double bond and a hydrocarbon group having 3 to 40 carbon atoms.

The hydrophobic monomer may have at least one hydrocarbon group having 3 to 40 carbon atoms. The hydrocarbon group is preferably an aliphatic hydrocarbon group, particularly preferably a saturated aliphatic hydrocarbon group, and particularly preferably an alkyl group. The hydrocarbon group may be linear or branched. The hydrocarbon group may have 4 or more, 6 or more, 8 or more, 10 or more, 11 or more, 12 or more, 14 or more, or 16 or more carbon atoms, and preferably 6 or more carbon atoms. The hydrocarbon group has 40 or less, 30 or less, 25 or less, 22 or less or 20 or less carbon atoms, and preferably 30 or less carbon atoms.

The hydrophobic monomer may be a monomer represented by the formula:

CH₂=C(-R¹²)-C(=O)-Y¹¹-(R¹¹)ₖ

wherein R¹¹ is an aliphatic hydrocarbon group having 3 to 40 carbon atoms,
R¹² is a hydrogen atom, a monovalent organic group or a halogen atom,
Y¹¹ is a divalent to tetravalent group composed of at least one selected from a direct bond, a divalent to tetravalent hydrocarbon group having 1 carbon atom, - C₆H₄-, -O-, -C(=O)-, -S(=O)₂- and -NR'-, where R' is a hydrogen atom or a hydrocarbon group having 1 to 4 carbon atoms, and
k is 1 to 3.

R¹¹ is preferably a branched or long-chain (or long-chain linear) hydrocarbon group. The hydrocarbon group is preferably an aliphatic hydrocarbon group, particularly a saturated aliphatic hydrocarbon group, particularly an alkyl group. The -CH₃ group has a lower surface free energy than the -CH₂- group and tends to exhibit liquid repellency. Therefore, a structure having many branches and many -CH₃ groups is preferred. On the other hand, a long-chain alkyl group having a certain length exhibits high liquid repellency due to its crystallinity. Therefore, R¹¹ may be a branched hydrocarbon group (for example, a branched alkyl group), particularly a t-butyl group or an isopropyl group, a group having a multi-branched structure, or a long-chain hydrocarbon group (or long-chain linear hydrocarbon group), for example, an alkyl group. R¹¹ may have 4 or more, 6 or more, 8 or more, 10 or more, 11 or more, 12 or more, 14 or more, 16 or more or 18 or more carbon atoms, and has preferably 12 or more carbon atoms. R¹¹ may have 40 or less, 30 or less, 25 or less, 20 or less, 15 or less or 10 or less carbon atoms.

k is 1, 2 or 3. When Y¹¹ has a tetravalent hydrocarbon group having 1 carbon atom, k is 3. When Y¹¹ has a trivalent hydrocarbon group having 1 carbon atom, k is 2. When Y¹¹ does not have a trivalent and tetravalent hydrocarbon group having 1 carbon atom (for example, when Y¹¹ has a divalent hydrocarbon group having 1 carbon atom (-CH₂-) (for example, 1 to 6)), k is 1.

R¹² may be a hydrogen atom, a methyl group, a halogen atom, a substituted or unsubstituted benzyl group, a substituted or unsubstituted phenyl group, or a -CF₃ group. Examples of R¹² include a hydrogen atom, a methyl group, a chlorine atom, a bromine atom, an iodine atom, a fluorine atom, -CF₃ group, and a cyano group. R¹² is preferably a hydrogen atom, a methyl group, or a chlorine atom. R¹² is more preferably a methyl group. Higher liquid repellency is obtained when R¹² is a methyl group. R¹² may be a hydrogen atom in terms of reactivity.

Y¹¹ is preferably a divalent group. Examples of the divalent to tetravalent hydrocarbon group having 1 carbon atom include -CH₂-, -CH= having a branched structure, and -C=having a branched structure.

Y¹¹ may be -Y'-, -Y'-Y'-, -Y'-C(=O)-, -C(=O)-Y'-, - Y'-C(=O)-Y'-, -Y'-X'-, -Y'-X'-Y'-, -Y'-X'-Y'-C(=O)-, -Y'-X'-C(=O)-Y'-, -Y'-X'-Y'-C(=O)-Y'- or -Y'-X'-Y'-X'-wherein Y' is each independently a direct bond, -O-, - NR'- where R' is a hydrogen atom or a hydrocarbon group having 1 to 4 carbon atoms, or -S(=O)₂-, X' is -(CH₂)ₘwhere m is an integer of 1 to 10, for example, 1 to 5, a linear hydrocarbon group having an unsaturated bond having 1 to 10, for example, 1 to 5 carbon atoms, a hydrocarbon group with a branched structure having 1 to 20, for example, 1 to 10 or 1 to 5 carbon atoms, or - (CH₂)₁-C₆H₄-(CH₂)₁- where l is each independently an integer of 0 to 5 and -C₆H₄- is a phenylene group. Preferably, Y¹¹ is not only a divalent hydrocarbon group.

Specific examples of Y¹¹ include -O-, -NH-, -O-C(=O)-, -NH-C(=O)-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O) -, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)m-NH-C(=O)-O-, -O-(CH₂)ₘ-C(=O)-NH-, -O-(CH₂)ₘ-NH-C(=O)-, -O-(CH₂)ₘ-NH-C(=O)-NH-, - O-(CH₂)ₘ-O-C₆H₄-, -O-(CH₂)ₘ-NH-S(=O)₂-, -O-(CH₂)ₘ-S(=O)₂-NH-, -NH-(CH₂)ₘ-NH-S(=O)₂-, -NH-(CH₂)ₘ-S(=O)₂-NH-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, or -NH-(CH₂)ₘ-NH-C₆H₄-, wherein m is an integer of 1 to 5, in particular 2 or 4.
Y¹¹ is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂- or-O-(CH₂)ₘ-S(=O)₂-NH-, -NH-(CH₂)ₘ-O-C(=O)-, -NH-(CH₂)ₘ-NH-C(=O)-, -NH-(CH₂)ₘ-O-C(=O)-NH-, -NH-(CH2)ₘ-NH-C(=O)-O-, - NH-(CH₂)ₘ-NH-C(=O)-NH-,
wherein m is an integer of 1 to 10 (for example, 1 to 5), in particular 2, 4, 6, 8 or 10. Y¹¹ is more preferably -O-, -NH-, -O-(CH₂)ₘ-O-C(=O)-NH-, -O-(CH₂)m-NH-C(=O)-O-, or -O-(CH₂)ₘ-NH-C(=O)-, -O-(CH₂)ₘ-NH-S(=O)₂-, or -O-(CH₂)m-S(=O)₂-NH-, in particular -O-, -NH-, -O-(CH₂)m-NH-C(=O)-, -O-(CH₂)ₘ-NH-C(=O)-NH-.

It is preferable that the hydrophobic monomer does not have a reactive group or a hydrophilic group. Examples of reactive groups include an epoxy group, a chloromethyl group, a bromomethyl group, an iodomethyl group and blocked isocyanate group. Examples of hydrophilic groups include a hydroxyl group, a polyalkylene oxide group, an amino group, a carboxylic acid group, a sulfonic acid group, a phosphoric acid group, an alkali metal or alkaline earth metal salt group of a carboxylic acid, a sulfonic acid, or a phosphoric acid, an ammonium salt group in which a chlorine, bromine or iodine ion is the counter anion, and other ionic groups.

The hydrophobic monomer may have a solubility in water at 25°C of 10 g/l or less, 5 g /l or less, 3 g /l or less, 1 g/l or less, 0.5 g/ l or less, or 0.1 g/l or less, and preferably 3 g/ l or less. The homopolymer of the hydrophobic monomer may have a solubility in water at 25°C of 10 g/ l or less, 5 g/ l or less, 3 g/ l or less, 1 g/ l or less, 0.5 g/ l or less, or 0.1 g /l or less, and preferably 3 g/ l or less.

The homopolymer of the hydrophobic monomer may have a water contact angle of 75° or more, 80° or more, 85° or more, 90° or more, 95° or more, 100° or more, 101° or more, 103° or more, 105° or more, 110° or more, 115° or more or 120° or more, and preferably 90° or more or 100° or more. The homopolymer of the hydrophobic monomer may have a water contact angle of 160° or less, 150° or less, 140° or less, 130° or less, 125° or less or 110° or less. The water contact angle in that range is preferred in terms of liquid repellency, in particular, water-repellency of the copolymer. For the water contact angle of the homopolymer, a silicon wafer substrate is spin-coated with a chloroform solution of the homopolymer with a solid concentration of 1.0%, and 2 µL of water is dropped on the coating film and the water contact angle is measured 1 minute after the droplet reached the film.

The hydrophobic monomer may or may not have a fluoroalkyl group (e.g., perfluoroalkyl group) having 1 or more, 3 or more, 6 or more, or 8 or more carbon atoms and 20 or less, 12 or less, 10 or less, 8 or less, 6 or less or 3 or less carbon atoms. The hydrophobic monomer may be a fluorine-free monomer.

Specific examples of the hydrophobic monomer are as follows. Although compounds of the following chemical formulas are acryl compounds having a hydrogen atom at the α-position, specific examples may include methacrylic compounds having a methyl group at the α-position and α-chloracrylic compounds having a chlorine atom at the α-position. Also in the styrene derivative, although compounds of the following chemical formulas are a hydrogen atom at the α-position, specific examples may include α-methylstyrene compounds having a methyl group at the α-position and α-chlorostyrene compounds having a chlorine atom at the α-position, and preferred are styrene compounds having a hydrogen atom at the α-position.

CH₂=CHC(=O)OC₁₈H₃₇

CH₂=CHC(=O)OCₙH₂ₙ₊₁

CH₂=CHC(=O)NHCₙH₂ₙ₊₁

CH₂=CHC(=O)OC₂H₄OC(=O)NHC₁₈H₃₇

CH₂=CHC(=O)OC₂H₄NHC(=O) OC₁₈H₃₇

CH₂=CHC(=O)OCₘH₂ₘNHC(=O)CₙH₂ₙ₊₁

CH₂=CHC(=O)OC₂H₄OC(=O)NHCₙH₂ₙ₊₁

CH₂=CHC(=O)OC₂H₄NHC(=O)OCₙH₂ₙ₊₁

CH₂=CHC(=O)OC₂H₄NHC(=O)NHCₙH₂ₙ₊₁

CH₂=CHC(=O)OCₘH₂ₘNHC(=O)NHCₙH₂ₙ₊₁

CH₂=CHC(=O)OC₄H₈OC(=O)NHCₙH₂ₙ₊₁

CH₂=CHC(=O)NHCₘH₂ₘOC(=O)NHCₙH₂ₙ₊₁

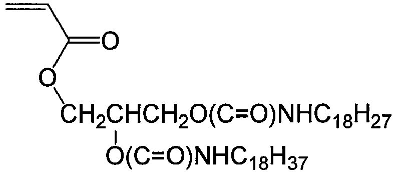

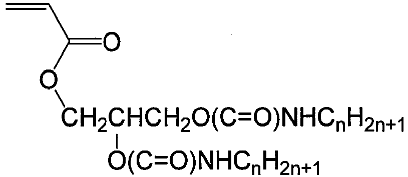

CH₂=CHC(=O)OCₘH₂ₘNHSO₂CₙH₂ₙ₊₁

CH₂=CHC(=O)OCₘH₂ₘSO₂NHCₙH₂ₙ₊₁

wherein n is a number of 3 to 40 and m is a number of 1 to 5.

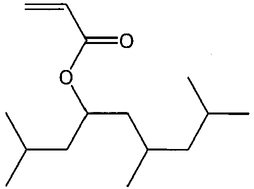

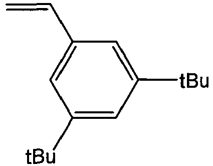

Specific preferred examples of hydrophobic monomers include stearyl (meth)acrylate, stearyl (meth)acrylamide, butyl (meth)acrylate, t-butyl (meth)acrylate, octyl (meth)acrylate, isooctyl (meth)acrylate, decyl (meth)acrylate, isodecyl (meth)acrylate, nonyl (meth)acrylate, isononyl (meth)acrylate, lauryl (meth)acrylate, icosyl (meth)acrylate, behenyl (meth)acrylate, stearyl α-chloroacrylate, icosyl α-chloroacrylate, behenyl α-chloroacrylate, stearic acid amidoethyl (meth)acrylate, 2-stearamidoethyl acrylate, CH₂=CHC(=O)OC₂H₄NHSO₂C₁₈H₃₇, t-butylstyrene and 2, 4-di-t-butylstyrene.

### [Cyclic vinylidene monomer]

The cyclic vinylidene monomer is a compound represented by the formula: 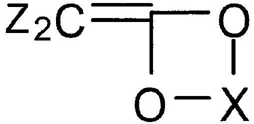 wherein X is an aliphatic group having 1 to 10 carbon atoms and Z is at least one selected from the group consisting of a hydrogen atom, a hydrocarbon group having 1 to 6 carbon atoms, and a halogen atom.

The number of atoms constituting the ring may be 3 or more, or 4 or more, and 10 or less, 9 or less, 8 or less, 7 or less, or 6 or less.

X is an aliphatic group having 1 to 10 carbon atoms. X may be saturated or unsaturated, and is preferably saturated. X may be linear or branched and is preferably linear.

X may have 2 or more, 3 or more, or 4 or more carbon atoms and 10 or less, 9 or less, 8 or less, 7 or less, or 6 or less carbon atoms.

Part of X is optionally substituted by a hydroxyl group, a halogen atom, an ester bond or an amide bond, or is optionally interrupted by ethereal oxygen. It is preferable that X is an alkylene group optionally having a substituent or an alkylene group optionally interrupted by ethereal oxygen.

Z is at least one selected from a hydrogen atom, a hydrocarbon group having 1 to 6 carbon atoms, and a halogen atom. The hydrocarbon group having 1 to 6 carbon atoms is preferably an aliphatic group, in particular, an alkyl group, and the alkyl group may have 1 to 3 carbon atoms, and for example 1 or 2. The halogen atom may be a bromine atom, a chlorine atom or a fluorine atom, and is preferably a chlorine atom or a fluorine atom. Of the two monomers in the cyclic vinylidene monomer, at least one may be a hydrogen atom or a methyl group (in particular a hydrogen atom).

The cyclic vinylidene monomer may or may not have a fluoroalkyl group (e.g., perfluoroalkyl group) having 1 or more, 3 or more, 6 or more, or 8 or more carbon atoms and 20 or less, 12 or less, 10 or less, 8 or less, 6 or less, or 3 or less carbon atoms. The cyclic vinylidene monomer may be a fluorine-free monomer.

Specific examples of cyclic vinylidene monomers include 2-methylene-1,3-dioxoran, 2-methylene-1,3-dioxane and 2-methylene-1,3-dioxepane.

### [Other monomers]

The polymer according to the present disclosure may have a repeating unit derived from a monomer other than the hydrophobic monomer or the cyclic vinylidene monomer. The type of other monomers is not limited, and examples thereof include a reactive/hydrophilic monomer, a crosslinkable monomer, a cyclic group-containing monomer, a siloxane group-containing monomer, a halogenated olefin monomer and a fluorine-containing monomer. Selecting an appropriate hydrophobic monomer leads to excellent liquid repellency. Other monomers may or may not have a fluoroalkyl group (e.g., perfluoroalkyl group) having 1 or more, 3 or more, 6 or more, or 8 or more carbon atoms and 20 or less, 12 or less, 10 or less, 8 or less, 6 or less, or 3 or less carbon atoms. Other monomers may be a fluorine-free monomer.

### (Reactive/ hydrophilic monomer)

The reactive/ hydrophilic monomer includes one ethylenically unsaturated double bond and at least one reactive group and/or hydrophilic group. Examples of reactive groups include an epoxy group, a chloromethyl group, a bromomethyl group, an iodomethyl group and a blocked isocyanate group. Examples of hydrophilic groups include a hydroxyl group, an amino group, a carboxylic acid group, a sulfonic acid group, a phosphoric acid group, an alkali metal or alkaline earth metal salt group of carboxylic acid, sulfonic acid or phosphoric acid, and an ammonium salt group whose counter anion is a chlorine ion, a bromine ion or an iodine ion. The reactive/ hydrophilic monomer may be a fluorine-free monomer.

Examples of reactive/hydrophilic monomers include glycidyl (meth)acrylate, glycerol (meth)acrylate, hydroxymethyl (meth)acrylate, hydroxyethyl (meth)acrylate, 3-hydroxypropyl (meth)acrylate, 2-hydroxypropyl (meth)acrylate, 2,3-dihydroxypropyl (meth)acrylate, 3-chloro-2-hydroxypropyl (meth)acrylate, 3-hydroxybutyl (meth)acrylate, 4-hydroxybutyl (meth)acrylate, 2-hydroxybutyl (meth)acrylate, 2-acetoacetoxyethyl (meth)acrylate, 4-hydroxybutyl acrylate glycidyl ether, acrylic acid, methacrylic acid, trimethylsilyl (meth)acrylate, 2-(trimethylsilyloxy)ethyl (meth)acrylate, 2-(dimethylamino)ethyl (meth)acrylate, 2-(tert-butylamino)ethyl (meth)acrylate, a dimethylaminoethyl methacrylate quaternary compound and tetrahydrofurfuryl (meth)acrylate.

### (Crosslinkable monomer)

The crosslinkable monomer has at least two ethylenically unsaturated double bonds.

The reactive/ hydrophilic monomer may be a fluorine-free monomer.

Examples of cross-linkable monomers include divinylbenzene, 1,4-butanediol di(meth)acrylate, 1,6-hexanediol di(meth)acrylate, 1,9-nonanediol di(meth)acrylate, neopentyl glycol di(meth)acrylate, polyethylene glycol di(meth)acrylate, triethylene glycol di(meth)acrylate, ethylene glycol di(meth)acrylate, methylene glycol di(meth)acrylate, polytetramethylene glycol di(meth)acrylate, dimethyloltricyclodecane di(meth)acrylate, trimethylolpropane tri(meth)acrylate, adamantyl di(meth)acrylate, glycerin di(meth)acrylate, tricyclodecane dimethanol di(meth)acrylate, dicyclopentanyl di(meth)acrylate, 5-hydroxy-1,3-adamantane di(meth)acrylate, pentaerythritol triacrylate, pentaerythritol tetraacrylate and dipentaerythritol hexaacrylate

### (Cyclic hydrocarbon group-containing monomer)

The cyclic hydrocarbon group-containing monomer has one ethylenically unsaturated double bond and a cyclic hydrocarbon group. The cyclic hydrocarbon group is saturated or unsaturated, and is preferably saturated. The cyclic hydrocarbon group may be a monocyclic group, a polycyclic group or a bridged ring group, and is preferably a bridged ring group. The cyclic group may have a chain group (e.g., a linear or a branched chain hydrocarbon group).

The cyclic hydrocarbon group may have 4 or more, 6 or more, or 8 or more carbon atoms and 30 or less, 26 or less, 22 or less, 18 or less, or 14 or less carbon atoms.

Specific examples of cyclic hydrocarbon groups include a cyclohexyl group, a t-butylcyclohexyl group, an adamanthyl group, a 2-methyl-2-adamanthyl group, a 2-ethyl-2-adamanthyl group, a bornyl group, an isobornyl group, a norbornyl group, a dicyclopentanyl group, a dicyclopentenyl group, a benzyl group, a phenyl group, a naphthyl group, a 2-t-butylphenyl group, a residue in which one or more hydrogen atoms are removed from the above groups (e.g., a cyclohexylene group, an adamanthylene group, a phenylene group, a naphthylene group) and a substituted group thereof.

The cyclic hydrocarbon group-containing monomer may be a fluorine-free monomer.

### (Halogenated olefin monomer)

Examples of halogenated olefin monomers include halogenated vinyl such as vinyl fluoride, vinyl chloride, vinyl bromide and vinyl iodide and halogenated vinylidene such as vinylidene fluoride, vinylidene chloride, vinylidene bromide and vinylidene iodide.

The halogenated olefin monomer may be a fluorine-free monomer.

### (Fluorine-containing monomer)

The fluorine-containing monomer may have one ethylenically unsaturated double bond and a fluoroalkyl group (e.g., a perfluoroalkyl group having 1 to 20, 1 to 12, 1 to 6 or 1 to 3 carbon atoms).

The fluorine-containing monomer may be a monomer represented by the formula:

CH₂=C(-R²²)-C(=O)-Y²¹-(Rf)ₗ

wherein Rf is a fluoroalkyl group having 1 to 20 carbon atoms,
R²² is a hydrogen atom, a monovalent organic group (e.g., a methyl group) or a halogen atom (e.g., chlorine), Y²¹ is a divalent to tetravalent group composed of at least one selected from a direct bond, a divalent to tetravalent hydrocarbon group having 1 carbon atom, - C₆H₄-, -O-, -C(=O)-, -S(=O)₂- and -NR'-, where R' is a hydrogen atom or a hydrocarbon group having 1 to 4 carbon atoms, and l is 1 to 3, preferably 1.

Specific examples of fluorine-containing monomers are as follows.

CH₂=CHC(=O)OCₘH₂ₘC₂F₅

CH₂=CHC(=O)OCH₂C₂F₅

CH₂=CHC(=O)OCH₂CH₂C₄F₉

CH₂=CHC(=O)OCH₂CH₂C₆F₁₃

In the above formula, m is 1 to 20.

### (Others)

Examples of monomers other than the above include ethylene, vinyl acetate, acrylonitrile, styrene, polyethylene glycol (meth)acrylate, polypropylene glycol (meth)acrylate, methoxypolyethylene glycol (meth)acrylate, methoxypolypropylene glycol (meth)acrylate, vinyl alkyl ether and a siloxane group-containing monomer.

### [Composition of copolymer]

In the copolymer, the proportion of the repeating unit derived from the hydrophobic monomer may be 5 parts by mole or more, 10 parts by mole or more, 15 parts by mole or more, 20 parts by mole or more, 25 parts by mole or more, or 30 parts by mole or more, and is preferably 10 parts by mole or more based on 100 parts by mole in total of the repeating units. In the copolymer, the proportion of the repeating unit derived from the hydrophobic monomer may be 70 parts by mole or less, 60 parts by mole or less, 50 parts by mole or less, or 40 parts by mole or less, and is preferably 60 parts by mole or less based on 100 parts by mole in total of the repeating units.

In the copolymer, the proportion of the repeating unit derived from the cyclic vinylidene monomer may be 10 parts by mole or more, 20 parts by mole or more, 30 parts by mole or more, 40 parts by mole or more, 50 parts by mole or more, or 60 parts by mole or more, and is preferably 20 parts by mole or more based on 100 parts by mole in total of the repeating units. In the copolymer, the proportion of the repeating unit derived from the cyclic vinylidene monomer may be 95 parts by mole or less, 90 parts by mole or less, 85 parts by mole or less, 75 parts by mole or less, or 70 parts by mole or less and is preferably 90 parts by mole or less based on 100 parts by mole in total of the repeating units.

In the copolymer, the total of the repeating units derived from other monomers may be 0 parts by mole or more, 0.3 parts by mole or more, 1 parts by mole or more, 5 parts by mole or more, 10 parts by mole or more, 20 parts by mole or more, or 30 parts by mole or more based on 100 parts by mole in total of the repeating units. In the copolymer, the total of the repeating units derived from other monomers may be 40 parts by mole or less, 30 parts by mole or less, 20 parts by mole or less, 10 parts by mole or less, or 5 parts by mole or less, and is preferably 30 parts by mole or less based on 100 parts by mole in total of the repeating units.

When a plurality of other monomers are present in the copolymer, the proportion of the repeating unit derived from the respective other monomers may be 0 parts by mole or more, 0.1 parts by mole or more, 1 parts by mole or more, 5 parts by mole or more, 10 parts by mole, or more or 20 parts by mole or more based on 100 parts by mole in total of the repeating units. In the copolymer, the proportion of the repeating unit derived from the respective other monomers may be 35 parts by mole or less, 25 parts by mole or less, 15 parts by mole or less, 10 parts by mole or less, 5 parts by mole or less, or 3 parts by mole or less, and is preferably 25 parts by mole or less based on 100 parts by mole in total of the repeating units.

The copolymer may have a weight average molecular weight (Mw) of 1,000 or more, 3,000 or more, 5,000 or more or 10,000 or more. The copolymer may have a weight average molecular weight (Mw) of 5,000,000 or less, 3,000,000 or less, 500,000 or less, 300,000 or less, 100,000 or less or 50,000 or less. The copolymer may have a poly dispersity index (Mw/Mn) of 1.0 or more, 1.2 or more, 1.5 or more, 2.0 or more, or 3.0 or more. The copolymer may have a poly dispersity index (Mw/Mn) of 7.5 or less, 5.0 or less, 4.0 or less, 3.0 or less, or 2.0 or less. The molecular weight of the copolymer is usually measured by GPC (gel permeation chromatography).

The copolymer may or may not have a fluoroalkyl group (e.g., perfluoroalkyl group) having 1 or more, 3 or more, 6 or more, or 8 or more carbon atoms and 20 or less, 12 or less, 10 or less, 8 or less, 6 or less or 3 or less carbon atoms. The fluoroalkyl group may be a perfluoroalkyl group. Examples of fluoroalkyl groups include -CF₂CF₃, -CF₂CF₂CF₃, -CF(CF₃)₂, -CF₂CF₂CF₂CF₃, - CF₂CF(CF₃)₂, -C(CF₃)₃, - (CF₂)₄CF₃, - (CF₂)₂CF(CF₃)₂, - CF₂C(CF₃)₃, -CF(CF₃)CF₂CF₂CF₃, - (CF₂)₅CF₃, -(CF₂)₃CF(CF₃)₂, - C(CF₃)₂CH₃, -C(CF₃)₂H, -CF₂CF₂H, -CF₂CF₂CF₂CF₂H and - CF₂CF₂CF₂CF₂CF₂CF₂H. The copolymer may be a non-fluorine polymer.

### <Method for producing copolymer>

A known method may be used as a method for producing the copolymer. For example, emulsion polymerization, solution polymerization, suspension polymerization and bulk polymerization may be used. The type of polymerization, which is not limited as long as the copolymer of the present disclosure is prepared, includes radical polymerization, cation polymerization and anion polymerization, and radical polymerization is preferred. In radical polymerization, since two oxygen atoms constituting part of the ring of the cyclic vinylidene monomer are directly bonded to the vinylidene group, an ester group is formed due to transition of radicals in copolymerization. Formation of an ester group provides a copolymer having a repeating unit with a structure represented by the formula: -(-CZ₂-C(=O)-O-X-)- in the skeleton of the main chain.

The method for producing the copolymer is not limited. For example, monomers may be polymerized in an aqueous medium in the presence or absence of a surfactant or a dispersant to give a copolymer. Alternatively, polymer is produced by solution polymerization and then a surfactant and water are added thereto and the solvent is removed to give a water dispersion containing the copolymer. Or a method for producing a copolymer by bulk polymerization, in which monomers are polymerized in the absence of solvent may be used.

In emulsion polymerization without using a surfactant, it is preferable to polymerize the monomer in an aqueous medium at a low concentration (for example, a monomer concentration of 1 to 30 % by weight, particularly 1 to 15 % by weight).

In solution polymerization, a method may be used, in which monomers are dissolved in an organic solvent in the presence of a polymerization initiator and after replacing air with nitrogen, the solution is heated at 30 to 120°C for 1 to 10 hours with stirring. Examples of polymerization initiators include azobisisobutyronitrile, benzoyl peroxide, di-t-butyl peroxide, lauroyl peroxide, cumene hydroperoxide, t-butyl peroxypivalate, diisopropyl peroxydicarbonate and 2,2'-azobis(4-methoxy-2,4-dimethylvaleronitrile). 0.01 to 20 parts by mole, for example, 0.01 to 10 parts by mole of the polymerization initiator may be used based on 100 parts by mole of the monomers.

The organic solvent is inert to the monomers and dissolves or homogeneously disperses them, and may be, for example, an ester (for example, an ester having 2 to 30 carbon atoms, specifically ethyl acetate, or butyl acetate), a ketone (for example, a ketone having 2 to 30 carbon atoms, specifically methyl ethyl ketone or diisobutyl ketone), or an alcohol (for example, an alcohol having 1 to 30 carbon atoms, specifically isopropyl alcohol, ethanol or methanol). Specific examples of organic solvents include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1, 1, 2, 2-tetrachloroethane, 1,1,1-trichloroethane, trichloroethylene, perchloroethylene, tetrachlorodifluoroethane, and trichlorotrifluoroethane. The organic solvent may be used in an amount of 50 to 99.5 parts by weight, for example, 70 to 99 parts by weight based on 100 parts by weight of the total of the monomer and the organic solvent.

In the emulsion polymerization, a method may be employed in which the monomer is emulsified in water in the presence of a polymerization initiator and a surfactant, nitrogen substitution is performed, and then stirring and polymerization are performed in the range of 30 to 80°C for 1 to 10 hours. Water-soluble polymerization initiators such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, 2,2'-azobis(2-methylpropionamidine) dihydrochloride, 4,4'-azobis(4-cyanovaleric acid), 2,2'-azobis[2-methyl-N-(2-hydroxyethyl)propionamide], 2,2'-azobis[2-(2-imidazolin-2-yl)propane] dihydrochloride, 2,2'-azobis[2-(2-imidazolin-2-yl)propane], sodium peroxide, potassium persulfate, and ammonium persulfate, and oil-soluble polymerization initiators such as azobisisobutyronitrile, benzoyl peroxide, di-t-butyl peroxide, lauryl peroxide, cumene hydroperoxide, t-butyl peroxypivalate and diisopropyl peroxydicarbonate may be used as a polymerization initiator. The polymerization initiator is used in the range of 0.01 to 10 parts by mole based on 100 parts by mole of the monomer. If necessary, a reducing agent such as rongalite, ascorbic acid, tartaric acid, sodium disulfite, isoascorbic acid and ferrous sulfate may also be used in combination.

As the surfactant, various anionic, cationic or nonionic surfactants can be used, and the surfactant is used in the range of 0.5 to 20 parts by weight based on 100 parts by weight of the monomer. Anionic and/or nonionic and/or cationic surfactants are preferably used. When the monomers are not completely compatible with each other, it is also preferable to add a compatibilizer, for example, a water-soluble organic solvent, which is sufficiently compatible with these monomers. By adding the compatibilizer, it is possible to improve the emulsifiability and copolymerizability.

Examples of the water-soluble organic solvent include acetone, methyl ethyl ketone, ethyl acetate, propylene glycol, dipropylene glycol monomethyl ether, dipropylene glycol, tripropylene glycol, ethanol, and methanol, and the water-soluble organic solvent may be used in the range of 0.1 to 50 parts by weight, for example 1 to 40 parts by weight, based on 100 parts by weight of water.

A chain transfer agent may be used in the polymerization. The molecular weight of the polymer can be changed according to the amount of the chain transfer agent used. Examples of chain transfer agents are mercaptan group-containing compounds such as lauryl mercaptan, thioglycol, and thioglycerol (particularly alkyl mercaptan (having 1 to 30 carbon atoms, for example)), and inorganic salts such as sodium hypophosphite and sodium bisulfite. The amount of the chain transfer agent used may be in the range of 0.01 to 10 parts by weight, for example, 0.1 to 5 parts by weight, based on 100 parts by weight of the total amount of the monomers.

In suspension polymerization, a method may be used, in which monomers are dispersed in water in the presence of a polymerization initiator and a dispersant and after replacing air with nitrogen, polymerization is performed with stirring at 30 to 80°C for 1 to 10 hours. An oil-soluble polymerization initiator such as benzoyl peroxide, lauroyl peroxide, azobisisobutyronitrile, benzoyl peroxide, di-t-butyl peroxide, lauroyl peroxide, cumene hydroperoxide, t-butyl peroxypivalate, diisopropyl peroxydicarbonate and 2,2'-azobis(4-methoxy-2,4-dimethylvaleronitrile) may be used as a polymerization initiator. 0.01 to 10 parts by mole of a polymerization initiator may be used based on 100 parts by mole of the monomers.

Examples of dispersants include a water-soluble polymer such as polyvinyl alcohol, methylcellulose, polyacrylamide and polyvinyl pyrrolidone; and poorly soluble inorganic compounds such as tribasic calcium phosphate, magnesium pyrophosphate, magnesium oxide and hydroxyapatite.

In bulk polymerization, a method may be used, in which various monomers and a polymerization initiator are dissolved in liquid monomers and after replacing air with nitrogen, polymerization is performed with stirring at 30 to 80°C for 1 to 10 hours. An oil-soluble polymerization initiator such as benzoyl peroxide, lauroyl peroxide, azobisisobutyronitrile, benzoyl peroxide, di-t-butyl peroxide, lauroyl peroxide, cumene hydroperoxide, t-butyl peroxypivalate and diisopropyl peroxydicarbonate may be used as a polymerization initiator. 0.01 to 10 parts by mole of a polymerization initiator may be used based on 100 parts by mole of the monomers.

### <Water- and oil-repellent composition>

The water- and oil-repellent composition has water-repellency and/or oil-repellency and includes a copolymer and liquid medium. The water- and oil-repellent composition may further include at least one selected from a surfactant and other additives.

### [Copolymer]

The amount of the copolymer may be 0.1% by weight or more, 1% by weight or more, 3% by weight or more, 5% by weight or more or 10% by weight or more based on the water- and oil-repellent composition. The amount of the liquid medium may be 75% by weight or less, 50% by weight or less, 30% by weight or less, 15% by weight or less, or 10% by weight or less based on the water- and oil-repellent composition.

### [Liquid medium]

The water- and oil-repellent composition comprises a liquid medium, preferably an aqueous medium. The liquid medium is water alone, an organic solvent alone or a mixture of water and an organic solvent, and is preferably water alone and a mixture of water and an organic solvent.

When the liquid medium is a mixture of water and an organic solvent, the amount of the organic solvent may be 3% by weight or more, 10% by weight or more, 30% by weight or more, 50% by weight or more, or 75% by weight or more based on the liquid medium. The amount of the organic solvent is 90% by weight or less, 50% by weight or less, 30% by weight or less, or 10% by weight or less based on the liquid medium.

The amount of liquid medium may be 30% by weight or more, 50% by weight or more, 60% by weight or more, 75% by weight or more or 90% by weight or more based on the water- and oil-repellent composition. The amount of liquid medium may be 95% by weight or less, 75% by weight or less, or 50% by weight or less based on the water- and oil-repellent composition.

### [Surfactant or dispersant]

The water- and oil-repellent composition may or may not comprise a surfactant (emulsifier) or a dispersant. Usually, a small amount of a surfactant or a dispersant (e.g., 0.01 to 15 parts by weight based on 100 parts by weight of the monomers) may be added during polymerization, or a surfactant or a dispersant may be added after polymerization in order to stabilize particles during polymerization and to stabilize water dispersion after polymerization. Examples of surfactants (emulsifiers) and dispersants are as described above.

When the object to be treated is a textile product, it is preferable that in the water- and oil-repellent composition, the surfactant or the dispersant comprises a nonionic surfactant. Furthermore, it is preferable that the surfactant comprises one or more surfactants selected from a cationic surfactant, an anionic surfactant and an amphoteric surfactant. It is preferable to use a nonionic surfactant and a cationic surfactant in combination.

For each of the nonionic surfactant, the cationic surfactant and the amphoteric surfactant, one of them may be used, or two or more of them may be used in combination.

The amount of the surfactant or the dispersant may be 15 parts by weight or less, 10 parts by weight or less, 7.5 parts by weight or less, 5 parts by weight or less, 2.5 parts by weight or less based on 100 parts by weight in total of the monomers. In general, addition of surfactant or dispersant improves stability of water dispersion and permeability into fabric.

### [Blocked isocyanate compound]

The water- and oil-repellent composition may or may not include a blocked isocyanate compound. The blocked isocyanate compound may be added before polymerization or after polymerization (e.g., after polymerization and before curing step).

The blocked isocyanate compound may be produced by allowing isocyanate (which may be a compound represented by A(NCO)ₘ where A is a group which remains after removing an isocyanate group from an isocyanate compound and m is an integer of 2 to 8) to react with a blocking agent (which may be a compound represented by RH, where R may be a hydrocarbon group optionally substituted by a heteroatom such as a nitrogen atom and an oxygen atom, and H is a hydrogen atom).

Examples of A(NCO)ₘ include tolylene diisocyanate (TDI), diphenylmethane diisocyanate (MDI) and hexamethylene diisocyanate (HDI). Examples of blocking agents constituting the R group include oxime, phenol, alcohol, mercaptan, amide, imide, imidazole, urea, amine, imine, pyrazole and an active methylene compound.

Preferred blocked isocyanate compounds include blocked isocyanate such as oxime blocked toluene diisocyanate, blocked hexamethylene diisocyanate and blocked diphenyl methane diisocyanate.

The amount of the blocked isocyanate compound may be 15 parts by weight or less, 10 parts by weight or less, 7.5 parts by weight or less, 5 parts by weight or less, 2.5 parts by weight or less based on 100 parts by weight in total of the monomers (or 100 parts by weight in total of the polymer).

### [Other additives]

The water- and oil-repellent composition may include other additives. Examples of other additives include a binder resin, a dispersant, a water-repellent agent, an oil-repellent agent, a drying rate adjuster, a cross-linking agent, a film formation agent, a compatibilizer, an antifreezing agent, a viscosity adjuster, an ultraviolet absorber, an antioxidant, a pH adjuster, an antifoaming agent, a texture modifier, a slippage modifier, an antistatic agent, a hydrophilizing agent, an antibacterial agent, a preservative, an insect repellent, a fragrant agent, a flame retarder, a sizing agent and a paper strengthening agent. The amount of other additives may be 0.1 to 20 parts by weight, for example, 0.1 to 10 parts by weight based on 100 parts by weight in total of the monomers.

### <Application of water- and oil-repellent composition>

The water- and oil-repellent composition (e.g., a water- and oil-repellent composition in the form of a water dispersion of the copolymer) may be used as a water-repellent agent, an oil-repellent agent, a soil resistant agent, a soil release agent, a release agent and a mold release agent. The water- and oil-repellent composition may be used as an external treatment agent (surface-treating agent) or an internal treatment agent.

By treating a substrate with the water- and oil-repellent composition, the copolymer in the water- and oil-repellent composition forms a surface coating structure on the surface of the substrate.

It is preferable that the object to be treated (substrate) after treatment is dried and heated preferably at a temperature of the Tg or more of the copolymer, e.g., 100°C to 200°C to provide liquid repellency. Treatment at the temperature of the Tg or more of the copolymer allows the surface of the substrate to be coated with the copolymer, inducing the sequence of the side chain. This leads to formation of a highly hydrophobic surface coating structure.

The surface coating structure may be formed by applying the water- and oil-repellent composition to the object to be treated (substrate) by a known method and attaching the copolymer to the surface of the substrate. Usually, a method is used, in which the water- and oil-repellent composition is diluted by dispersing in an organic solvent or water and the resultant is attached to the surface of the object to be treated by a known method such as immersion coating, spray coating and foam coating and then dried. If necessary, the above may be applied to the surface of the object to be treated together with an appropriate cross-linking agent (e.g., a blocked isocyanate compound) and cured. Furthermore, an insect repellent, a softening agent, an antibacterial agent, a flame retarder, an antistatic agent, a coating material fixing agent, a wrinkle-resistant agent, a sizing agent and a paper strengthening agent may be added to the water- and oil-repellent composition to be used in combination.

Examples of the object to be treated with the water- and oil-repellent composition include textile products, stone materials, filters (for example, electrostatic filters), antidust masks, components of fuel cells (for example, gas diffusion electrodes and gas diffusion supports), glass, wood, leather, fur, asbestos, bricks, cement, metals and oxides, ceramic products, plastics, coated surfaces and plasters.

Examples of textile products include various products such as fabric products and paper products.

Examples of fabric products include animal and plant natural fibers such as cotton, hemp, wool and silk fibers, synthetic fibers such as polyamide, polyester, polyvinyl alcohol, polyacrylonitrile, polyvinyl chloride and polypropylene fibers, semisynthetic fibers such as rayon and acetate fibers, inorganic fibers such as glass fibers, carbon fibers and asbestos fibers, and mixtures of any of these fibers. The fabric product includes woven fabrics, knitted fabrics, nonwoven fabrics, clothing fabrics and carpets. An unfinished fiber, yarn or intermediate textile product (for example, a sliver or a rove) may also be treated.

Examples of paper products include paper made of bleached or unbleached chemical pulp such as kraft pulp and sulfite pulp, bleached or unbleached high yield pulp such ground pulp, mechanical pulp and thermomechanical pulp, or waste paper pulp such as waste newspaper, waste magazine, old corrugated containers and deinked waste paper; paper containers; and paper formed articles. Specific examples of paper products include food packaging paper, gypsum board liner paper, coated base paper, mechanical paper, general liner and corrugating mediums, neutral pure white roll paper, neutral liner, anti-corrosion liner and metal laminated paper, kraft paper, neutral printing/writing paper, neutral coated base paper, neutral PPC paper, neutral thermal recording paper, neutral pressure sensitive base paper, neutral pressure-sensitive base paper, neutral inkjet paper, neutral communication paper and mold paper (mold containers).

The water- and oil-repellent compositions can be applied to fibrous substrates (for example, textile products) by any of the methods known for treating textile products with liquids. When the textile product is fabric, the fabric may be soaked in the solution, or the solution may be applied or sprayed to the fabric. The product may be externally or internally treated. When the textile product is paper, paper may be coated with the water- and oil-repellent composition. Alternatively, the solution may be applied to or sprayed on paper, or treatment may be performed while mixing the composition with pulp slurry before papermaking. The product may be externally or internally treated.

The copolymer may be applied to a textile product (in particular, paper or fabric) which has been previously prepared. The copolymer may also be applied to paper at various stages of paper making, for example, during drying paper. The water- and oil-repellent composition may be applied to a textile product through a cleaning method, and may be, for example, applied to a textile product in washing application or a dry cleaning method.

Alternatively, the fibrous substrate may be leather. For making the leather hydrophobic and lipophobic, the copolymer may be applied to the leather in various stages of leather processing, for example in a leather wetting processing period or a leather finishing period.

The water- and oil-repellent composition can also be used as an external mold release agent. For example, a surface of a substrate can be easily peeled from another surface (another surface on the substrate or a surface on another substrate).

The "treatment" means that by immersion, spraying, coating or the like, the treatment agent is applied to the object to be treated. The treatment causes the copolymer as an active ingredient of the treatment agent to permeate the inside of the object to be treated and/or adhere to a surface of the object to be treated.

While certain embodiments have been described, it will be understood that various changes in form and details may be made therein without departing from the spirit and scope of the claims.

### <Examples>

Hereinafter, the present disclosure will be described in detail with reference to Examples, but the present disclosure is not limited to these Examples.

In Examples and Comparative Examples, abbreviations mean as follows.
MDO: 2-methylene-1,3-dioxepane 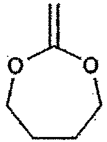
StA: stearyl acrylate 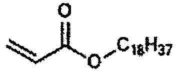
AEA: 2-stearamidoethyl acrylate 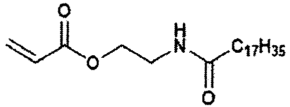
HD: n-hexadecane
PCL: polycaprolactone

### (Method for measuring contact angle of polymer)

For the contact angle of the polymer, a silicon wafer substrate was spin-coated with a chloroform solution of the resulting polymer with a solid concentration of 1.0%, and the static contact angle was measured. The static contact angle was obtained by dropping 2 µL of water or hexadecane on a coating film and measuring the contact angle 1 minute after the droplet reached the film.

### (Example 1)

Raw material monomers with the composition shown in Table 1, 2% by mole of azobisisobutyronitrile (based on the monomers) and toluene were added to a reactor in which air was replaced by nitrogen so that the molar concentration of the monomers was 1.5 M. The mixture was heated at 65°C for 14 hours with stirring, and then reprecipitated in methanol to give a polymer. The polymer has a molecular weight (Mw) of 44,000 in terms of polystyrene and a molecular weight distribution of (Mw/Mn) 1.5. The contact angle of the resulting polymer was measured and the result is shown in Table 1.

### (Example 2)

Raw material monomers with the composition shown in Table 1 and 2% by mole of 2,2'-azobis(4-methoxy-2,4-dimethylvaleronitrile) (based on the monomers) were added to a reactor in which air was replaced by nitrogen. The mixture was heated at 20°C for 20 hours with stirring to give a polymer. The polymer has a molecular weight (Mw) of 1,240,000 in terms of polystyrene and a molecular weight distribution of (Mw/Mn) 2.7. The contact angle of the resulting polymer was measured and the result is shown in Table 1.

### (Comparative Example 1)

The contact angle of PCL made by FUJIFILM Wako Chemicals Corporation was measured. The result is shown in Table 1.

**[Table 1]**

| | Raw material monomer(mmol) | | | Contact angle | |
|---|---|---|---|---|---|
| | MDO | StA | AEA | HD | Water |
| Example 1 | 2 | - | 1 | 37.7 | 104.6 |
| Example 1 | 3 | 1.5 | - | 60.1 | 101.1 |
| Comparative Example 1 | PCL (FUJIFILM Wako Chemicals Corporation) | | | 6.3 | 61.4 |

### (Evaluation of biodegradability in soil)

The polymer prepared in Example 1 was dissolved in chloroform and a 30-um thick film was obtained by a solvent cast method. The film was left in soil at 30°C for a predetermined period, and the condition was visually observed or with a microscope to evaluate how it was decomposed. Clear whitening of the film was observed on day 30 and numerous pores were found on the surface of the film in observation with a scanning electron microscope on day 74. This shows that the film is biodegradable in soil. The results suggest that inclusion of ester bonds improves biodegradability of the film.

## Claims

1. A copolymer comprising:
a repeating unit derived from a hydrophobic monomer comprising one ethylenically unsaturated double bond and a hydrocarbon group having 3 to 40 carbon atoms; and
a repeating unit derived from a cyclic vinylidene monomer that is a compound represented by the formula: 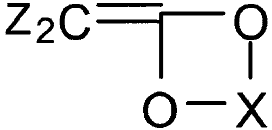
wherein X is an aliphatic group having 1 to 10 carbon atoms, and Z is at least one selected from the group consisting of a hydrogen atom, a hydrocarbon group having 1 to 6 carbon atoms, and a halogen atom.

2. The copolymer according to claim 1, wherein the copolymer has an ester bond in a skeleton of a main chain.

3. The copolymer according to claim 1 or 2, wherein X is an alkylene group optionally having a substituent or an alkylene group optionally interrupted by ethereal oxygen.

4. The copolymer according to any one of claims 1 to 3, wherein the hydrophobic monomer is a compound represented by the formula:
CH₂=C(-R¹²)-C(=O)-Y¹¹-(R¹¹)ₖ
wherein R¹¹ is an aliphatic hydrocarbon group having 3 to 40 carbon atoms,
R¹² is a hydrogen atom, a monovalent organic group or a halogen atom,
Y¹¹ is a divalent to tetravalent group composed of at least one selected from a direct bond, a divalent to tetravalent hydrocarbon group having 1 carbon atom, - C₆H₄-, -O-, -C(=O)-, -S(=O)₂- and -NR'-, where R' is a hydrogen atom or a hydrocarbon group having 1 to 4 carbon atoms, and
k is 1 to 3.

5. The copolymer according to any one of claims 1 to 4, comprising 10 parts by mole or more and 60 parts by mole or less of the repeating unit derived from a hydrophobic monomer and 20 parts by mole or more and 90 parts by mole or less of the repeating unit derived from a cyclic vinylidene monomer based on 100 parts by mole in total of the repeating units.

6. The copolymer according to any one of claims 1 to 5, wherein the copolymer is a non-fluorine copolymer.

7. A method for producing a copolymer having an ester bond in a main chain, comprising:
copolymerizing a hydrophobic monomer comprising one ethylenically unsaturated double bond and a hydrocarbon group having 3 to 40 carbon atoms, with a cyclic vinylidene monomer represented by the formula: 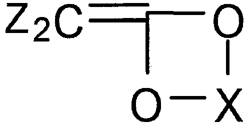
wherein X is an aliphatic group having 1 to 10 carbon atoms and Z is at least one selected from the group consisting of a hydrogen atom, a hydrocarbon group having 1 to 6 carbon atoms, and a halogen atom.

8. The method according to claim 7, wherein the copolymerization is radical copolymerization.

9. A water- and oil-repellent composition comprising the copolymer according to any one of claims 1 to 6.

10. The water- and oil-repellent composition according to claim 9, which is for a textile product.

11. A textile product to which the copolymer according to any one of claims 1 to 6 is attached.
